(19) Europäisches Patentamt / European Patent Office / Office européen des brevets

(11) **EP 3 760 590 B1**

(12) **EUROPÄISCHE PATENTSCHRIFT**

(45) Veröffentlichungstag und Bekanntmachung des Hinweises auf die Patenterteilung:
**22.03.2023 Patentblatt 2023/12**

(21) Anmeldenummer: **20176246.5**

(22) Anmeldetag: **25.05.2020**

(51) Internationale Patentklassifikation (IPC):
**C02F 1/76** (2006.01)   **C01B 11/02** (2006.01)
C02F 103/02 (2006.01)

(52) Gemeinsame Patentklassifikation (CPC):
**C02F 1/76; C01B 11/024;** C02F 2103/023;
C02F 2303/04

(54) **VERFAHREN ZUR ERZEUGUNG VON CHLORDIOXID**

METHOD FOR PRODUCING CHLORINE DIOXIDE

PROCÉDÉ DE FABRICATION DE DIOXYDE DE CHLORE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2019 DE 102019117728**

(43) Veröffentlichungstag der Anmeldung:
**06.01.2021 Patentblatt 2021/01**

(73) Patentinhaber: **ProMinent GmbH**
**69123 Heidelberg (DE)**

(72) Erfinder:
• **Rothe, Matthias**
**68766 Hockenheim (DE)**
• **Weibler, Wolfgang**
**68542 Heddesheim (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
WO-A1-2013/053789     US-A- 6 051 135
US-A1- 2003 118 503     US-B2- 8 282 891

**Beschreibung**

Die vorliegende Erfindung betrifft ein Verfahren zur Erzeugung einer wässrigen Lösung von Chlordioxid, bei dem man eine Säure, ein Chlorit und optional Wasser in einen Reaktor einleitet, wobei die in den Reaktor eingeleitete Säure bezogen auf das in den Reaktor eingeleitete Chlorit mit einem molaren Überschuss in den Reaktor eingeleitet wird.

Darüber hinaus wird auch eine Vorrichtung zur Erzeugung einer wässrigen Lösung von Chlordioxid beschrieben (nicht erfindungsgemäß), wobei die Vorrichtung einen Reaktor, eine erste Leitung zum Einleiten einer Säure in den Reaktor, eine zweite Leitung zum Einleiten eines Chlorits in den Reaktor und optional eine dritte Leitung zum Einleiten von Wasser in den Reaktor aufweist, wobei die Vorrichtung zur Ausführung des erfindungsgemäßen Verfahrens geeignet ist.

Chlordioxid ($ClO_2$) ist bei Raumtemperatur und atmosphärischem Druck ein gelblich-rötliches Gas mit desinfizierenden Eigenschaften und mit guter Löslichkeit und Beständigkeit in Wasser. In der Luft zerfällt gasförmiges Chlordioxid ab einer Konzentration von 300 g/m$^3$ allerdings explosionsartig. Je nach Druck und Temperatur kann sich in wässriger Lösung ab einer Konzentration von 30 g/l flüssiges Chlordioxid abscheiden, das explosionsartig zerfällt.

Die desinfizierende Wirkung ist stärker als die des Chlor und vom pH-Wert des Wassers unabhängig. Bei der Anwendung entstehen keine unerwünschten chlorierten Desinfektionsnebenprodukte, und Geschmack und Geruch des desinfizierten Wassers werden nicht negativ beeinflusst. U.a. aufgrund dieser Vorteile ersetzt es in immer mehr Applikationen das sonst häufig eingesetzte Chlor. Chlordioxid wird im Bereich der kommunalen Trink- und Abwasseraufbereitung, in Industriebetrieben, bei Getränkeherstellern, in Gastronomie und Krankenhäusern, aber auch in Wohnhäusern eingesetzt, um eine zuverlässige Desinfektion und Entkeimung von Trink-, Brauch- und Prozesswasser zu erreichen. Dabei wird Chlordioxid vorwiegend nach dem Chlorit- Säure-Verfahren oder nach dem Chlorit- Chlor-Verfahren vor Ort mit entsprechend ausgelegten Chlordioxidanlagen erzeugt.

Die vorliegende Erfindung betrifft das Chlorit-Säure-Verfahren, bei dem eine wässrige Lösung eines Chlorits mit einer Säure zu Chlordioxid ($ClO_2$) und einem Chlorid umgesetzt wird.

Weit verbreitet ist das Natriumchlorit-Salzsäure-Verfahren, bei dem Natriumchlorit (NaClO2) mit Salzsäure (HCl) gemäß der Reaktionsgleichung:

$$5\ NaClO_2 + 4\ HCl \rightarrow 4\ ClO_2 + 5\ NaCl + 2\ H_2O$$

zu Chlordioxid ($ClO_2$) und Natriumchlorid (NaCl) umgesetzt wird. Alternativ kann das Chlorit-Säure-Verfahren auch mit anderen Säuren, wie z.B. Schwefelsäure, und auch mit anderen Chloriten, wie z.B. Kaliumchlorit, durchgeführt werden.

Die Desinfektion mittels Chlordioxid wird durch Chlordioxidanlagen ermöglicht, deren Betriebsweise in Regelwerken, wie z.B. des DVGW (Deutscher Verein des Gas- und Wasserfaches) vorgegeben wird (DVGW Arbeitsblätter W 224 und W 624). Nach Vorgaben dieser Regelwerke ist bei der Umsetzung einer Natriumchloritlösung mit Salzsäure ein mindestens dreifacher Überschuss an Salzsäure gegenüber dem Chlorit genannt, um die für eine zuverlässige Desinfektion erforderliche stöchiometrische Ausbeute von wenigstens 85 % an Chlordioxid zu gewährleisten. Etwas genauer wird nach DVGW Arbeitsblatt W 224 eine Säurezugabe von mindestens dem dreifachen stöchiometrischen Überschuss genannt, was bedeutet, dass pro Mol Chlorit mindestens 2,4 Mol Säure eingesetzt werden sollen. Um eine hohe Ausbeute auch bei allen Betriebsbedingungen wie beispielsweise Temperatur und Anlagenauslastung zu erreichen, hat sich in der Praxis ein dreifacher molarer Überschuss durchgesetzt, was bedeutet, dass in der Praxis pro Mol Chlorit üblicherweise drei Mol Säure eingesetzt werden (R = 3). Dies entspricht einem stöchiometrischen Überschuss von 375 % nach der oben angegebenen Reaktionsgleichung. Der dreifache molare Überschuss wird z.B. erreicht, wenn die in den DVGW-Arbeitsblättern erwähnten handelsüblich vorkonfektionierten Chemikalienkonzentrationen 9 % Salzsäure und 7,5 % Natriumchloritlösung im Volumenverhältnis 1:1 eingesetzt werden.

In der kommunalen Trink- und Abwasseraufbereitung sowie, in industriellen Anwendungen müssen große Mengen an Wasser desinfiziert bzw. entkeimt werden, und die Chemikalien, die für diese Zwecke eingesetzt werden müssen, stellen einen erheblichen Kostenfaktor dar. Es besteht daher ein Bedarf nach Verfahren und Vorrichtungen, die mit geringeren Kosten ausgeführt bzw. betrieben werden können. Einige relevante Dokumente im Stand der Technik sind WO 2013/053789 A1, US 8 282 891 B2 und US 6 051 135 A.

Die Aufgabe der vorliegenden Erfindung besteht vor diesem Hintergrund unter anderem darin, ein Verfahren bereitzustellen, mit dem die bei herkömmlichen Verfahren zur Erzeugung von Chlordioxid nach dem Chlorit-Säure-Verfahren anfallenden Kosten signifikant gesenkt werden können.

Gleichzeitig soll eine nicht erfindungsgemäße Vorrichtung bereitgestellt werden, mit welcher ein solches Verfahren ausgeführt werden kann.

Diese Aufgabe wird erfindungsgemäß durch ein Verfahren zur Erzeugung einer wässrigen Lösung von Chlordioxid gelöst, bei dem man eine Säure, ein Chlorit und optional Wasser in einen Reaktor einleitet, wobei man bei dem Verfahren die Reaktionstemperatur im Reaktor ermittelt und die Menge an Säure, Chlorit und/oder Wasser, die in den Reaktor eingeleitet wird, so wählt, dass die in den Reaktor eingeleitete Säure bezogen auf das in den Reaktor eingeleitete Chlorit mit einem molaren Überschuss in den Reaktor eingeleitet wird, wobei die Höhe des molaren Überschusses mit der Höhe der ermittelten Reaktionstemperatur variiert wird.

In der Praxis sind Chlordioxidkapazitäten von 4 kg/h keine Seltenheit, wie z.B. bei Anwendungen in der industriellen Prozess- und Kühlwasserbehandlung zum Entkeimen des Prozess- und Kühlwassers. Nach Berechnungen der Erfinder können beim Betreiben einer Chlordioxidanlage dieser Kapazität durch die Reduzierung der Säuremenge von R = 3 (pro Mol Chlorit drei Mol Säure) auf R = 2 (pro Mol Chlorit zwei Mol Säure) pro Jahr die Kosten der eingesetzten Chemikalien (im Berechnungsbeispiel Natriumchlorit und Salzsäure) um etwa 40.000 EUR pro Jahr reduziert werden, ohne dass hierbei die Zielausbeute von ≥ 85 % Chlordioxid unterschritten wird. Erfindungsgemäß wird dies dadurch erreicht, dass in dem Reaktor, in dem die Säure mit dem Chlorit umgesetzt wird, die Reaktionstemperatur ermittelt wird und der molare Überschuss der Säure bezogen auf das Chlorit im Reaktor so gewählt wird, dass die Höhe des molaren Überschusses mit der Höhe der ermittelten Reaktionstemperatur variiert wird. Grundlage hierfür ist, dass die Erfinder festgestellt haben, dass bei niedrigeren Reaktionstemperaturen geringere molare Überschüsse an Säure erforderlich sind als der von der in den DVGW-Arbeitsblättern verlangte dreifache molare Überschuss. Liegen im Reaktor allerdings höhere Reaktionstemperaturen vor, ist tatsächlich der von der DVGW verlangte dreifache molare Überschuss erforderlich, um eine Ausbeute von mindestens 85 % Chlordioxid zu erreichen.

Das erfindungsgemäße Verfahren kann grundsätzlich diskontinuierlich oder kontinuierlich durchgeführt werden. Die dabei eingesetzten "Chlorite" sind Salze der chlorigen Säure und vorzugsweise ausgewählt unter Natriumchlorit ($NaClO_2$) und Kaliumchlorit ($KClO_2$).

Der Begriff "Säure" umfasst im Sinne der vorliegenden Erfindung insbesondere anorganische Säuren, wie z.B. Salzsäure (HCl) und Schwefelsäure ($H_2SO_4$). Von der vorliegenden Erfindung umfasst sind auch solche Ausführungsformen, bei denen die Säure in Form eines ihrer Salze zugegeben wird, z.B. in Form von Natriumhydrogensulfat ($NaHSO_4$).

Das erfindungsgemäße Verfahren wird in einem "Reaktor" ausgeführt. Hierbei handelt es sich um einen chemischen Reaktor mit einem Reaktorbehälter, in dem das Reaktionsgemisch, das aus Säure, Chlorit und optional Wasser gebildet wird, reagieren kann. Der Reaktorbehälter weist einen von einer Reaktorbehälterwand umschlossenen Reaktorinnenraum auf, in dem im Betrieb das Reaktionsgemisch vorliegt.

Das "Reaktionsgemisch" entsteht durch das Einleiten der Edukte Säure und Chlorit in den Reaktorinnenraum. Die Durchmischung erfolgt vorzugsweise durch Wirbelvermischung und kann bei bestimmten Ausführungsformen forciert werden, z.B. indem die Edukte und optional Wasser mit scharfen Dosierhüben in den Reaktor eingeleitet werden.

Der Begriff "Reaktionstemperatur" wird im Sinne der vorliegenden Erfindung zur Bezeichnung der Temperatur angegeben, die im Reaktorbehälter oder genauer im Reaktorinnenraum oder noch genauer im Reaktionsgemisch vorliegt. Erfindungsgemäß liegt die Reaktionstemperatur bei dem erfindungsgemäßen Verfahren im Bereich von 10 bis 40 °C.

Der Begriff "molarer Überschuss" bezieht sich im Falle der vorliegenden Erfindung auf das Verhältnis der in den Reaktor eingeleiteten Säure bezogen auf das in den Reaktor eingeleitete Chlorit. Das bedeutet, dass bei einem Verhältnis von einem Mol Säure zu einem Mol Chlorit kein molarer Überschuss besteht (R = 1). Werden je Mol Chlorit jedoch beispielsweise 1,5 Mol Säure, 2 Mol Säure oder gar 3 Mol Säure zugesetzt, so liegt die in den Reaktor eingeleitete und mit dem Chlorit vermischte Säure bezogen auf das in den Reaktor eingeleitete Chlorit mit einem 1,5-fachen molaren Überschuss (R = 1,5), mit einem zweifachen molaren Überschuss (R = 2) oder gar mit einem dreifachen molaren Überschuss (R = 3) vor.

Hierbei gilt es zu beachten, dass der Begriff "molarer Überschuss" nicht mit dem Begriff "stöchiometrischer Überschuss" gleichzusetzen ist. Ausgehend von der oben angegebenen Reaktionsgleichung für die Reaktion von Natriumchlorit mit Salzsäure zu Chlordioxid, Natriumchlorid und Wasser entspricht ein dreifacher molarer Säureüberschuss einem stöchiometrischen Überschuss von 375 %.

Erfindungsgemäß liegt der molare Überschuss der Säure bezogen auf das Chlorit im Bereich von R = 2,0 bis 3,5.

Erfindungsgemäß wird die in den Reaktor eingeleitete Säure bezogen auf das in den Reaktor eingeleitete Chlorit bei einer ermittelten Reaktionstemperatur im Bereich von 10 bis 40 °C mit einem molaren Überschuss im Bereich von R = 2,0 bis 3,5 in den Reaktor eingeleitet.

Erfindungsgemäß nimmt die Höhe des molaren Überschusses der in den Reaktor eingeleiteten Säure bezogen auf das in den Reaktor eingeleitete Chlorit mit der Höhe der Reaktionstemperatur zu. Bei bestimmten Ausführungsformen erfolgt diese Zunahme kontinuierlich. Bei anderen Ausführungsformen der Erfindung erfolgt die Zunahme stufenweise. Bei speziellen Ausführungsformen der Erfindung erfolgt die Zunahme teilweise kontinuierlich und teilweise stufenweise.

Bei den Ausführungsformen der Erfindung, bei denen die Höhe des molaren Überschusses mit der Höhe der Reaktionstemperatur teilweise oder vollständig kontinuierlich zunimmt, ermittelt sich der molare Überschuss (R), der bei einer bestimmten Reaktionstemperatur (T) vorliegt, vorzugsweise nach der Formel

$$R = 2,0 + 0,05 \times (T-10) +/- 0,5$$

Bei den Ausführungsformen des erfindungsgemäßen Verfahrens, bei denen die Höhe des molaren Überschusses mit der Höhe der Reaktionstemperatur teilweise oder vollständig stufenweise zunimmt, kann eine oder mehrere der folgenden Stufen vorgesehen sein:

- Bei einer Reaktionstemperatur im Bereich von 10 bis <25 °C liegt der molare Überschuss im Bereich von R = 2,0 bis 2,5.
- Bei einer Reaktionstemperatur im Bereich von 25 bis 30 °C liegt der molare Überschuss im Bereich von R = 2,5 bis 3,0.
- Bei einer Reaktionstemperatur im Bereich von >30 bis 40 °C liegt der molare Überschuss im Bereich von R = 3,0 bis 3,5.

Bei bestimmten Ausführungsformen der Erfindung sind die Stufen so verteilt, dass bei einer Reaktionstemperatur, die <30 °C, <29 °C, <28 °C, <27 °C oder <25 °C ist, der molare Überschuss R = 2,5 wahlweise mit einem Toleranzbereich von +/-0,2 beträgt. Bei einer Reaktionstemperatur von >30 °C, >29 °C, >28 °C, >27 °C, >26 °C oder >25 °C beträgt der molare Überschuss R = 3,0 wahlweise mit einem Toleranzbereich von +/-0,2.

In den Ausführungsformen kann die Reaktionstemperatur auf verschiedene Weisen ermittelt werden. Entweder wird die Reaktionstemperatur unmittelbar anhand der im Reaktorinnenraum oder im Reaktionsgemisch gemessenen Temperatur ermittelt, beispielsweise mit einem im Reaktorbehälter korrosionsgeschützt angeordneten Temperatursensor, der z.B. mit einer Titanhülse gegenüber dem Reaktionsgemisch geschützt ist.

Bei einer alternativen Ausführungsform wird die Reaktionstemperatur anhand der an der Außenwand des Reaktorbehälters gemessenen Temperatur ermittelt. Bei weiteren alternativen Ausführungsformen wird die Temperatur der Edukte Säure, Chlorit und/oder Wasser, die in den Reaktor eingeleitet werden, entweder an der Leitung, über die die Einleitung erfolgt oder in einem Behälter, aus dem die Edukte entnommen werden oder an dessen Behälterwand gemessen. Da die Reaktionswärme bei der Erzeugung von Chlordioxid nach dem Chlorit-Säure-Verfahren relativ gering ist und zu einer Erwärmung des Reaktionsgemisches im Bereich von 1 bis 2 °C im Vergleich zu der Temperatur der eingesetzten Edukte liegt, lässt sich die im Reaktionsgemisch vorliegende Reaktionstemperatur auch auf diese Weise sehr präzise ermitteln.

Bei einer speziellen Ausführungsform wird die Temperatur in der Luft in der Umgebung, in der das Verfahren ausgeführt wird, ermittelt, sofern die Behälter, aus denen die Edukte der Reaktion entnommen werden, in derselben Umgebung befindlich sind. Hierbei wird angenommen, dass die in dieser Umgebung in den Behältern aufbewahrten Edukte im Wesentlichen dieselbe Temperatur aufweisen wie die Umgebung selbst, sodass sich hieraus ohne weiteres die Reaktionstemperatur im Reaktor ermitteln lässt.

Bei bestimmten Ausführungsformen der Erfindung wird der molare Überschuss der Säure bezogen auf das Chlorit zusätzlich zur Abhängigkeit von der Höhe der Reaktionstemperatur auch in Abhängigkeit von der Dauer der Reaktionszeit variiert.

Die "Reaktionszeit" entspricht hierbei der Verweilzeit des aus den Edukten erzeugten Reaktionsgemisches im Reaktor. Die Reaktionszeit kann im Bereich von 1 bis 100 Minuten liegen. Bei bestimmten Ausführungsformen liegt die Reaktionszeit im Bereich von 1 bis 40 Minuten bzw. im Bereich von 4 bis 40 Minuten. Bei alternativen Ausführungsformen liegt die Reaktionszeit im Bereich von 1 bis 30 Minuten bzw. im Bereich von 4 bis 30 Minuten.

Bei einer spezifischen Ausführungsform der vorliegenden Erfindung wird die Säure bezogen auf das Chlorit mit einem molaren Überschuss im Bereich von 2,0 bis 3,5 in den Reaktor eingeleitet, wobei der Wert des molaren Überschusses ab einer Reaktionszeit von 20 Minuten, ab einer Reaktionszeit von 30 Minuten oder ab einer Reaktionszeit von 40 Minuten mit der Dauer der Reaktionszeit größer wird.

Bei weiteren spezifischen Ausführungsformen der Erfindung liegt die Höhe des molaren Überschusses (R) in einem oder mehreren der folgenden Bereiche:

- Bei einer Reaktionszeit im Bereich von 1 bis <4 Minuten liegt die Höhe des molaren Überschusses im Bereich von R = 2,0 bis 2,5.
- Bei einer Reaktionszeit im Bereich von 4 bis 30 Minuten liegt die Höhe des molaren Überschusses im Bereich von R = 2,5 bis 3,0.
- Bei einer Reaktionszeit im Bereich von >30 bis 40 Minuten liegt die Höhe des molaren Überschusses im Bereich von R = 3,0 bis 3,5.

Bei bestimmten Ausführungsformen der vorliegenden Erfindung wird als Säure entweder Salzsäure oder Schwefelsäure eingesetzt. Bei den Ausführungsformen, bei denen Salzsäure zum Einsatz kommt, kann wahlweise konzentrierte Salzsäure mit einer Konzentration im Bereich von 25 bis 36 Gew.-% oder verdünnte Salzsäure mit einer Konzentration im Bereich von 3 bis 6 Gew.-% verwendet werden.

Bei spezifischen Ausführungsformen der vorliegenden Erfindung ist das eingesetzte Chlorit eine wässrige Lösung von Natriumchlorit oder Kaliumchlorit. Bei spezifischen Ausführungsformen der Erfindung liegt die Konzentration von Natriumchlorit oder Kaliumchlorit im Bereich von 20 bis 30 Gew.-% in der wässrigen Lösung.

Nach den Vorgaben der DVGW ist eine stöchiometrische Mindestausbeute von 85 % an Chlordioxid zu gewährleisten. Bei dem erfindungsgemäßen Verfahren wird dies dadurch realisiert, dass der molare Überschuss an Säure in Abhängigkeit von der Reaktionstemperatur und/oder in Abhängigkeit von der Reaktionszeit variiert wird. Bei bestimmten Ausführungsformen der Erfindung wird durch diese Steuerung eine stöchiometrische Mindestausbeute von 87 % oder gar eine Mindestausbeute von 90 % erreicht. Bei bevorzugten Ausführungsformen der Erfindung liegt die mit dem Verfahren erreichte Ausbeute im Bereich von 90 bis 95 %. Auf diese Weise ist sichergestellt, dass die von der DVGW geforderte Mindestausbeute von 85 % stets sicher und zuverlässig erfüllt wird.

Hierin wird auch eine nicht erfindungsgemäße "Chlordioxidanlage" beschrieben, also eine Vorrichtung zur Erzeugung einer wässrigen Lösung von Chlordioxid, wobei die Vorrichtung einen Reaktor, eine erste Leitung zum Einleiten einer Säure in den Reaktor, eine zweite Leitung zum Einleiten eines Chlorits in den Reaktor und optional eine dritte Leitung zum Einleiten von Wasser in den Reaktor aufweist, wobei die Vorrichtung insbesondere dadurch gekennzeichnet ist, dass sie eine Einrichtung zur Ermittlung der Reaktionstemperatur im Reaktor aufweist sowie eine Steuereinheit zum Steuern des Durchflusses an Säure, Chlorit und/oder Wasser über die erste, zweite und/oder dritte Leitung in den Reaktor. Dabei ist die Steuereinheit so eingerichtet, dass die in den Reaktor eingeleitete Säure bezogen auf das in den Reaktor eingeleitete Chlorit mit einem molaren Überschuss in den Reaktor eingeleitet wird, wobei dieser molare Überschuss mit der Höhe der Reaktionstemperatur variiert.

Der eingesetzte "Reaktor" ist ein chemischer Reaktor mit einem Reaktorbehälter, in dem das Reaktionsgemisch, das aus Säure, Chlorit und optional Wasser gebildet wird, reagieren kann. Der Reaktorbehälter weist eine Reaktorbehälterwand auf, die den Reaktorinnenraum, in dem im Betrieb das Reaktionsgemisch vorliegt, umschließt. In der Reaktorbehälterwand ist wenigstens ein Einlass vorgesehen, über den die Edukte der Chlorit-Säure-Reaktion und optional Wasser in den Reaktorinnenraum eingeleitet werden können.

Die nicht erfindungsgemäße Chlordioxidanlage ist so eingerichtet, dass mit ihr das erfindungsgemäße Verfahren ausgeführt werden kann. Bei den Ausführungsformen, bei denen das erfindungsgemäße Verfahren diskontinuierlich betrieben wird, handelt es sich bei dem Reaktor vorzugsweise um einen Mischbehälter für den Batchbetrieb. In den weit überwiegenden Fällen wird das erfindungsgemäße Verfahren jedoch kontinuierlich betrieben, und bei den Ausführungsformen der Chlordioxidanlage, bei denen dies der Fall ist, handelt es sich bei dem Reaktor vorzugsweise um einen Durchflussreaktor.

Die Edukte und optional Wasser werden dem Reaktor über Leitungen zugeführt. Hierbei handelt es sich um Rohrleitungen, die mit einer Quelle für die Edukte und optional Wasser verbunden sind.

Bei bestimmten Aspekten ist an wenigstens einer der Leitungen eine Dosierpumpe angeordnet, über welche die Dosierung wenigstens eines der Edukte und optional des Wassers erfolgen kann. Vorzugsweise ist eine Dosierpumpe für die Säure, eine Dosierpumpe für das Chlorit und optional eine Dosierpumpe für das Wasser vorgesehen.

Bei bestimmten Aspekten ist an wenigstens einer der Leitungen und/oder am Reaktor ein Ventil angeordnet, über dass die Durchflussmenge wenigstens eines der Edukte und optional des Wassers verändert werden kann. Vorzugsweise ist ein Ventil für die Säure, ein Ventil für das Chlorit und optional ein Ventil für das Wasser vorgesehen.

Bei bestimmten Aspekten ist an wenigstens einer der Leitungen und/oder am Reaktor eine Durchflussüberwachung angeordnet, mit der die Durchflussmenge wenigstens eines der Edukte und optional des Wassers kontrolliert werden kann.

Über die vorgesehene Steuerung der in den Reaktor eingeleiteten Säuremenge kann die Einstellung der Höhe des Säureüberschusses direkt im Reaktor erfolgen. Alternativ kann die Höhe des Säureüberschusses auch über die Steuerung der Menge an eingeleitetem Chlorit erfolgen.

Alternativ oder zusätzlich kann das Verfahren auch über die Zugabe von Wasser zum Reaktor gesteuert werden. Hierüber kann das wirksame Reaktionsvolumen des Reaktionsgemisches eingestellt werden. Außerdem kann durch Einleiten von zusätzlichem Wasser sichergestellt werden, dass die Maximalkonzentration an Chlordioxid von 30 g/l nicht überschritten wird. Letztlich kann auf diese Weise sogar sehr genau die gewünschte Konzentration an Chlordioxid eingestellt werden, wie z.B. eine Zielkonzentration von 20 g/l. Des Weiteren kann durch die Zuleitung größerer Mengen an Wasser auch die Reaktion durch Verdünnung abgestoppt werden. Insbesondere bei geringer Anlagenleistung wird dadurch die Verweilzeit unter hoher Konzentration im Reaktor verringert und dadurch die Stabilität der erhaltenen Chlordioxidlösung erhöht.

Die Steuerung erfolgt bei der Chlordioxidanlage über eine Steuereinheit. Hierbei handelt es sich um eine elektronische Einheit, in der elektronische Daten hinterlegt sind, die definieren, bei welcher Temperatur und bei welcher Reaktionszeit welcher molare Überschuss (R) einzustellen ist, um die gewünschte Chlordioxidausbeute zu erreichen. Die Steuereinheit weist hierfür wenigstens einen Signaleingang und wenigstens einen Signalausgang auf, worüber Signale über Kabel oder kabellos empfangen und gesendet werden können.

Insbesondere weist die Steuereinheit einen Signaleingang für Signale der Einrichtung zur Ermittlung der Reaktionstemperatur auf. Optional weist die Steuereinheit zusätzlich noch einen Signaleingang für Signale einer oder mehrerer Durchflussüberwachungen auf.

Außerdem weist die Steuereinheit insbesondere einen Signalausgang für ein Signal zur Steuerung der Menge an Säure und/oder Chlorit und optional Wasser, die in den Reaktor eingeleitet wird, auf. Dieses Signal zur Steuerung der Menge an Säure und/oder Chlorit und optional Wasser kann beispielsweise an das jeweilige Ventil, über dass die Durchflussmenge wenigstens eines der Edukte und optional des Wassers verändert werden kann, gesendet werden oder an die entsprechenden Dosierpumpen.

Die bei der Chlordioxidanlage vorgesehene Einrichtung zur Ermittlung der Reaktionstemperatur, ist ein Messgerät zur Bestimmung der Temperatur, insbesondere ein Thermometer, dessen Temperatursensor wahlweise im Reaktorinnenraum, an der Außenwand des Reaktorbehälters, an der Leitung, über die die Einleitung eines der Edukte oder Wasser erfolgt, in einem Behälter, aus dem die Edukte oder das Wasser entnommen werden, an der Wand des Behälters, aus dem die Edukte oder das Wasser entnommen werden, oder in dem Raum in dem die Anlage steht, angeordnet ist. Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Des Weiteren wird darauf hingewiesen, dass es für den Fachmann selbstverständlich ist, dass die nachfolgenden Ausführungsbeispiele lediglich dazu dienen, die als Ausführungsbeispiele wiedergegebenen möglichen Ausführungsformen der vorliegenden Erfindung beispielhaft anzugeben. Der Fachmann wird daher ohne Weiteres verstehen, dass darüber hinaus auch alle anderen Ausführungsformen, die die in den Ansprüchen genannten erfindungsgemäßen Merkmale oder Merkmalskombinationen aufweisen, innerhalb des Schutzumfangs der Erfindung liegen. Auf die umfassende, explizite Darstellung sämtlicher denkbarer Ausführungsformen wird hier nur der Kürze und der Lesbarkeit der Beschreibung wegen verzichtet.

Zum Nachweis der mit der vorliegenden Erfindung verbundenen Vorteile wird auf die anhängenden Figuren hingewiesen. Hierbei zeigen:

Figur 1: die stöchiometrische Chlordioxidausbeute bei einer Reaktionstemperatur von 15 °C bei verschiedenen Reaktionszeiten und bei Einsatz eines molaren Säureüberschusses im Bereich von R = 1 bis 3,

Figur 2: die stöchiometrische Chlordioxidausbeute bei einer Reaktionstemperatur von 25 °C bei verschiedenen Reaktionszeiten und bei Einsatz eines molaren Säureüberschusses im Bereich von R = 1 bis 3,

Figur 3: die stöchiometrische Chlordioxidausbeute bei einer Reaktionstemperatur von 35 °C bei verschiedenen Reaktionszeiten und bei Einsatz eines molaren Säureüberschusses im Bereich von R = 1 bis 3, und

Figur 4: eine schematische Darstellung der beschriebener Vorrichtung (nicht erfindungsgemäß) zur Erzeugung einer wässrigen Lösung von Chlordioxid.

Beispiele

Um den Einfluss der eingesetzten Mengen an Chlorit und Säure sowie den Einfluss der Reaktionstemperatur und der Reaktionszeit auf die Ausbeute an Chlordioxid zu untersuchen, wurden Laborversuche durchgeführt. Hierfür wurde eine gasdichte Glasspritze mit einem Volumen von 25 ml verwendet, die im Laboransatz als Reaktor dient. Für den Verschluss der Spritze wurde ein PTFE-Stopfen verwendet, sodass die Spritze mit Inhalt im Wasserbad inkubiert werden kann. Die gasdichte Glasspritze ist als Batchreaktor zu betrachten, bei dem zu einem bestimmten Zeitpunkt (Reaktionszeit) 5 ml Chlordioxidprobe entnommen werden kann.

Als Säure wurde im Laborversuch Salzsäure mit einer Konzentration von 9 Gew.-% verwendet. Das Chlorit wurde in Form einer wässrigen Natriumchloritlösung mit einer Konzentration von 7,5 Gew.-% bereitgestellt. Diese Konzentrationen sind so gewählt, dass beim Zusammengeben gleicher Volumina die Salzsäure im dreifach molaren Überschuss gegenüber dem Chlorit vorliegt. Um einen geringeren molaren Überschuss oder gar ein äquimolares Verhältnis (R = 1) zu erreichen, muss die eingesetzte Salzsäurelösung entsprechend verdünnt werden.

Die quantitative Bestimmung des erzeugten Chlordioxids erfolgt iodometrisch.

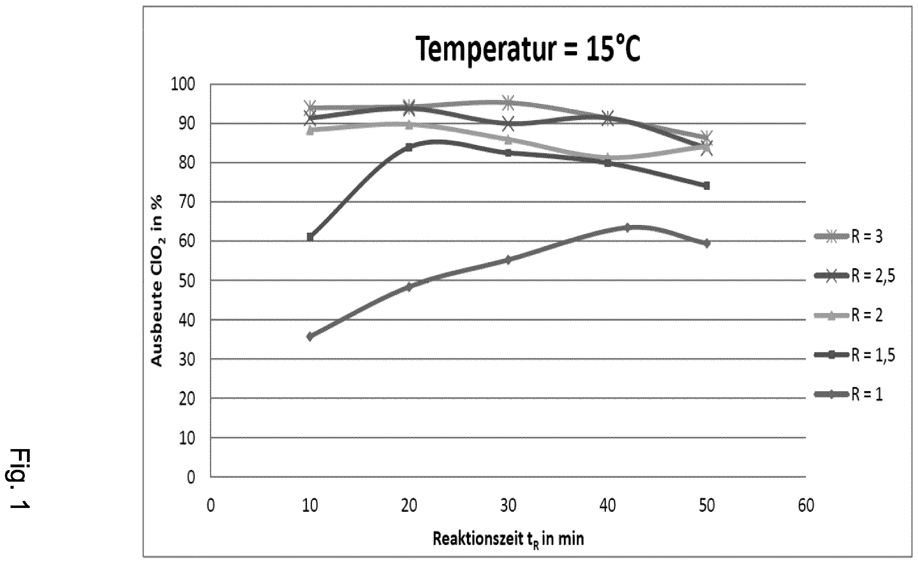

Die in Figur 1 dargestellten Kurven zeigen, dass bei einer Reaktionstemperatur von 15 °C die Ausbeute an Chlordioxid mit einem höheren molaren Säureverhältnis gegenüber dem eingesetzten Chlorit ansteigt. Mit steigendem Säureverhältnis steigt auch die Reaktionsgeschwindigkeit, was an der Verschiebung des Hochpunktes ab einem molaren Überschuss von R = 1,5 zu erkennen ist. Über weite Bereiche der Reaktionszeit werden mit molaren Überschüssen im Bereich von R = 1 bis 2 nicht die geforderten Chlordioxidausbeuten von wenigstens 85 % (stöchiometrisch) erreicht. Dies wird erst ab einem molaren Überschuss von R = 2,5 gewährleistet.

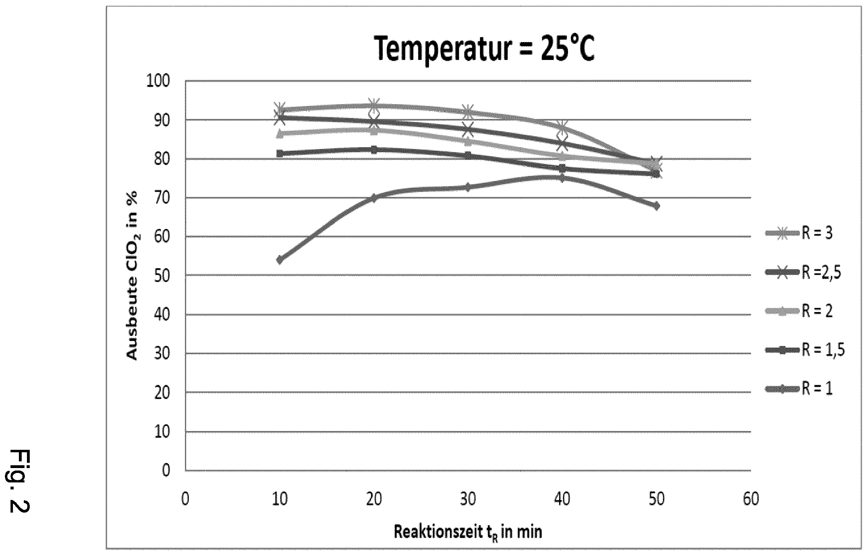

Aus den in Figur 2 dargestellten Kurven, die die Ergebnisse bei einer Reaktionstemperatur von 25°C zeigen, ist zu erkennen, dass bei Reaktionszeiten zwischen 10 und 30 Minuten grundsätzlich ein molares Säureverhältnis von R = 2 ausreichen würde, um eine Ausbeute von 85 % und mehr zu erhalten. Bei einem molaren Überschuss von R = 2,5 ist dies auch noch bei einer Reaktionszeit von bis zu 40 Minuten möglich.

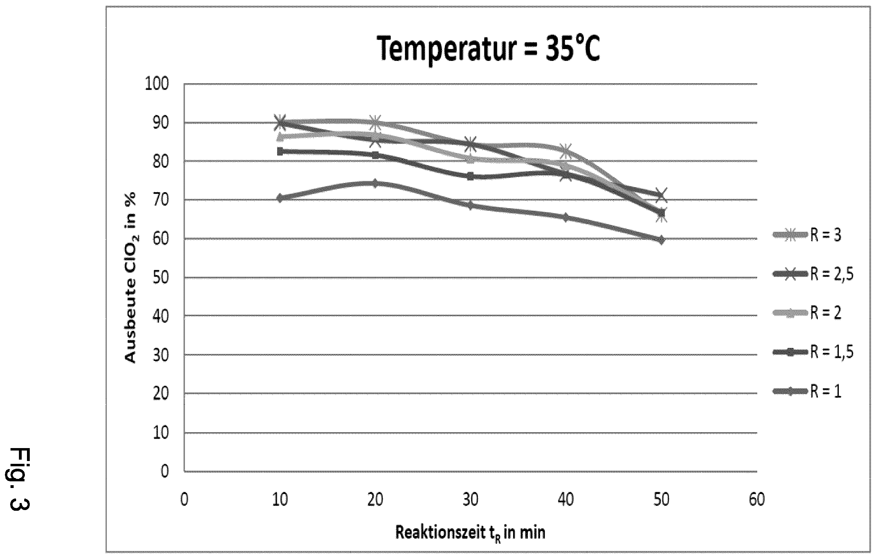

Aus den Kurven von Figur 3, welche die Verhältnisse bei einer Reaktionstemperatur von 35 °C wiederspiegeln, lässt sich auslesen, dass bei einer Reaktionszeit von bis zu 40 Minuten nur bei einem molaren Überschuss R = 3 zuverlässig Ausbeuten von wenigstens 85 % erreicht werden können.

Aus den vorliegenden Ergebnissen ist ersichtlich, dass bei Temperaturen von 15 °C und 25 °C und einer Reaktionszeit von 10 bis 30 Minuten mit einem molaren Säureverhältnis von R = 2 gearbeitet werden kann, um eine Ausbeute von mindestens 85 % zu erzielen, wie sie von den DVGW-Arbeitsblättern gefordert wird. Sollte die Reaktionszeit jedoch länger als 30 Minuten sein, muss bei Reaktionstemperaturen von 15 °C und 25 °C mindestens ein Säureverhältnis von R = 2,5 eingesetzt werden, um die geforderte Ausbeute von 85 % zu stabilisieren und nicht durch den bei diesen Temperaturen verstärkt einsetzenden Chlordioxidzerfall zu verringern. Bei einer Reaktionstemperatur von 35 °C und einer Reaktionszeit von 10 bis 20 Minuten kann ein molares Säureverhältnis von R = 2 ausreichend sein, um die geforderte Ausbeute zu erreichen. Werden die Reaktionszeiten jedoch größer als 20 Minuten, ist ein Säureverhältnis von R = 3 erforderlich, um den Chlordioxidzerfall zu kompensieren.

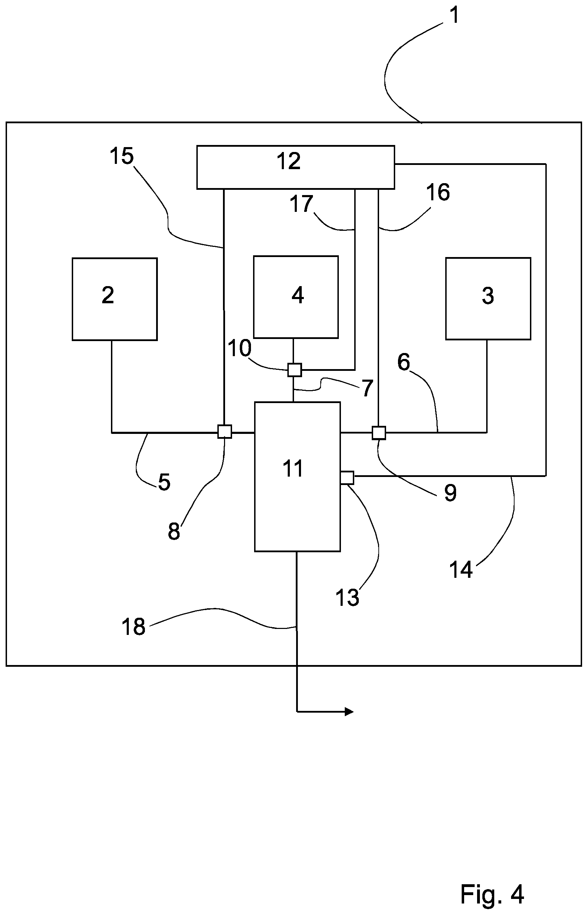

Figur 4 zeigt eine schematische Darstellung einer nicht erfindungsgemäßen Chlordioxidanlage 1 zur Erzeugung von Chlordioxid. Bei dieser Chlordioxidanlage 1 ist ein Behälter 2 für die Säure, ein Behälter 3 für das Chlorit und ein Behälter 4 für Wasser vorgesehen. Bei einer alternativen Variation weist die Vorrichtung keinen Behälter 4 für Wasser auf.

Die Behälter 2, 3 und 4 für Säure, Chlorit und Wasser sind über Rohrleitungen 5, 6 und 7 mit dem Reaktor 11 verbunden, um in den Reaktorbehälter die jeweilige Flüssigkeit einleiten zu können. Bei der Ausführungsform ohne Wasserbehälter 4 ist auch keine Leitung 7 für das Wasser vorgesehen.

Bei der hier dargestellten Vorrichtung sind an den Leitungen 5, 6 und 7 Ventile 8, 9 und 10 vorgesehen, über die der Durchfluss an Flüssigkeit durch die Leitungen 5, 6 und 7 verändert werden kann. Die Steuerung der Ventile 8, 9 und 10 und damit die Steuerung der Durchflussmengen erfolgt über die Steuereinheit 12, die über Signalleitungen 15, 16 und 17 mit dem jeweiligen Ventil 8, 9 bzw. 10 verbunden ist. Bei einer alternativen Variation werden statt der dargestellten Ventile andere Dosiereinrichtungen wie z.B. Dosierpumpen verwendet.

Am Reaktor 11 ist ein Thermometer 13 vorgesehen, das bei der hier dargestellten Vorrichtung die Temperatur an der Außenwand des Reaktorbehälters misst und über die Signalleitung 14 die gemessene Temperatur an die Steuereinheit 12 übermittelt.

In der Steuereinheit 12 wird anhand der vom Thermometer 13 gemessenen Reaktionstemperatur der für die erforderliche Mindestausbeute von 85 % Chlordioxid erforderliche molare Überschuss (R) an Säure ermittelt und dementsprechend die Dosierung an Säure und/oder Chlorit und/oder Wasser (sofern ein Wasserbehälter 4 vorhanden ist) über die Ventile 8, 9 und/oder 10 gesteuert. Dabei wird auch die Reaktionszeit berücksichtigt, die von der Kapazität abhängt, mit der die Chlordioxidanlage 1 zum gegebenen Zeitpunkt gefahren wird.

Die von der Chlordioxidanlage 1 im Reaktor 11 erzeugte Chlordioxidlösung wird über den Auslass 18 dorthin geleitet, wo die Chlordioxidlösung zur Anwendung kommen soll.

Bezugszeichenliste

| 1 | Vorrichtung zur Erzeugung von Chlordioxid (Chlordioxidanlage) |
| 2 | Behälter für Säure |
| 3 | Behälter für Chlorit |
| 4 | Behälter für Wasser |
| 5 | Leitung für Säure |
| 6 | Leitung für Chlorit |
| 7 | Leitung für Wasser |
| 8 | Ventil für Säure |
| 9 | Ventil für Chlorit |
| 10 | Ventil für Wasser |
| 11 | Reaktor |
| 12 | Steuereinheit |
| 13 | Thermometer |
| 14 | Signalleitung für Temperatur |
| 15 | Signalleitung für Säuredurchfluss |
| 16 | Signalleitung für Chloritdurchfluss |
| 17 | Signalleitung für Wasserdurchfluss |
| 18 | Auslass für Chlordioxidlösung |

**Patentansprüche**

1. Verfahren zur Erzeugung einer wässrigen Lösung von Chlordioxid, bei dem man eine Säure, ein Chlorit und optional Wasser in einen Reaktor einleitet, **dadurch gekennzeichnet, dass** bei dem Verfahren die Reaktionstemperatur im Reaktor ermittelt wird und die Menge an Säure, Chlorit und/oder Wasser, die in den Reaktor eingeleitet wird, so gewählt wird, dass die in den Reaktor eingeleitete Säure bezogen auf das in den Reaktor eingeleitete Chlorit bei einer ermittelten Reaktionstemperatur im Bereich von 10 bis 40°C mit einem molaren Überschuss im Bereich von 2,0 bis 3,5 in den Reaktor eingeleitet wird, wobei die Höhe des molaren Überschusses mit der Höhe der ermittelten Reaktionstemperatur variiert wird, indem die Höhe des molaren Überschusses mit der Höhe der Reaktionstemperatur zunimmt.

2. Verfahren nach Anspruch 1, **dadurch gekennzeichnet, dass** die Höhe des molaren Überschusses

   - bei einer Reaktionstemperatur im Bereich von 10 bis < 25°C im Bereich von 2,0 bis 2,5 liegt,
   - bei einer Reaktionstemperatur im Bereich von 25 bis < 30°C im Bereich von 2,5 bis 3,0 liegt und
   - bei einer Reaktionstemperatur im Bereich von 30 bis < 40°C im Bereich von 3,0 bis 3,5 liegt.

3. Verfahren nach einem der Ansprüche 1 und 2, **dadurch gekennzeichnet, dass** die Reaktionstemperatur anhand der Temperatur im Reaktor, an der Reaktoraußenwand, an einer Leitung zum Einleiten von Säure, Chlorit und/oder Wasser in den Reaktor, in einem Behälter aus dem in den Reaktor einzuleitende(s) Säure, Chlorit und/oder Wasser aufbewahrt werden, oder an dessen Behälterwand oder in der Luft in der Umgebung, in der das Verfahren ausgeführt wird, ermittelt wird.

4. Verfahren nach einem der Ansprüche 1 bis 3, **dadurch gekennzeichnet, dass** der molare Überschuss zusätzlich zur Abhängigkeit von der Höhe der Reaktionstemperatur auch in Abhängigkeit von der Dauer der Reaktionszeit variiert wird.

5. Verfahren nach Anspruch 4, **dadurch gekennzeichnet, dass** die Säure bezogen auf das Chlorit bei einer Reaktionszeit im Bereich von 1 bis 100 Minuten mit einem molaren Überschuss im Bereich von 2,0 bis 3,5 in den Reaktor eingeleitet wird, wobei der Wert des molaren Überschusses ab einer Reaktionszeit von 20 Minuten, ab einer Reaktionszeit von 30 Minuten oder ab einer Reaktionszeit von 40 Minuten mit der Dauer der Reaktionszeit größer wird.

6. Verfahren nach einem der Ansprüche 3 bis 5, **dadurch gekennzeichnet, dass** die Höhe des molaren Überschusses

   - bei einer Reaktionszeit im Bereich von 1 bis < 4 Minuten im Bereich von 2,0 bis 2,5 liegt,
   - bei einer Reaktionszeit im Bereich von 4 bis 30 Minuten im Bereich von 2,5 bis 3,0 liegt und
   - bei einer Reaktionszeit im Bereich von > 30 bis 40 Minuten im Bereich von 3,0 bis 3,5 liegt.

7. Verfahren nach einem der Ansprüche 1 bis 6, **dadurch gekennzeichnet, dass** die Säure Schwefelsäure oder Salzsäure ist.

8. Verfahren nach einem der Ansprüche 1 bis 7, **dadurch gekennzeichnet, dass** das Chlorit eine wässrige Lösung von Kaliumchlorit oder Natriumchlorit ist.

**Claims**

1. A method for the production of an aqueous solution of chlorine dioxide, in which an acid, a chlorite and optionally water are introduced into a reactor, **characterized in that** in the method, the reaction temperature in the reactor is determined and the quantity of acid, chlorite and/or water which is introduced into the reactor is selected in a manner such that the acid introduced into the reactor is introduced into the reactor with a molar excess with respect to the chlorite introduced into the reactor in the range from 2.0 to 3.5 at a determined reaction temperature in the range from 10°C to 40°C, wherein the extent of the molar excess is varied with the level of the determined reaction temperature, with the extent of the molar excess increasing with the level of the reaction temperature.

2. The method according to claim 1, **characterized in that** the extent of the molar excess

   - lies in the range from 2.0 to 2.5 at a reaction temperature in the range from 10°C to < 25°C,

- lies in the range from 2.5 to 3.0 at a reaction temperature in the range from 25°C to < 30°C, and
- lies in the range from 3.0 to 3.5 at a reaction temperature in the range from 30°C to < 40°C.

3. The method according to claim 1 or claim 2, **characterized in that** the reaction temperature is determined on the basis of the temperature in the reactor, on the reactor outer wall, on a line for introducing acid, chlorite and/or water into the reactor, in a container from which acid, chlorite and/or water to be introduced into the reactor are stored or on the container wall thereof, or in the air in the environment in which the method is carried out.

4. The method according to one of claims 1 to 3, **characterized in that** the molar excess is also varied as a function of the length of the reaction time in addition to the function of the level of the reaction temperature.

5. The method according to claim 4, **characterized in that** the acid is introduced into the reactor with a molar excess in the range from 2.0 to 3.5 with respect to the chlorite for a reaction time in the range from 1 to 100 minutes, wherein the value for the molar excess becomes greater with the length of the reaction time beyond a reaction time of 20 minutes, beyond a reaction time of 30 minutes or beyond a reaction time of 40 minutes.

6. The method according to one of claims 3 to 5, **characterized in that** the extent of the molar excess

- lies in the range from 2.0 to 2.5 for a reaction time in the range from 1 to < 4 minutes,
- lies in the range from 2.5 to 3.0 for a reaction time in the range from 4 to 30 minutes, and
- lies in the range from 3.0 to 3.5 for a reaction time in the range from > 30 to 40 minutes.

7. The method according to one of claims 1 to 6, **characterized in that** the acid is sulphuric acid or hydrochloric acid.

8. The method according to one of claims 1 to 7, **characterized in that** the chlorite is an aqueous solution of potassium chlorite or sodium chlorite.

**Revendications**

1. Procédé de génération d'une solution aqueuse de dioxyde de chlore, dans lequel on introduit dans un réacteur un acide, une chlorite et éventuellement de l'eau, **caractérisé en ce que** l'on détermine, pour le procédé, la température de réaction dans le réacteur, et que l'on sélectionne la quantité d'acide, de chlorite et/ou d'eau introduits dans le réacteur de façon telle que l'acide introduit dans le réacteur, sur la base de la chlorite introduite dans le réacteur à une température de réaction déterminée dans la plage de 10 à 40 °C, est introduit dans le réacteur avec un excès molaire dans la plage de 2,0 à 3,5, le niveau de l'excès molaire variant avec le niveau de la température de réaction déterminée **en ce que** le niveau de l'excès molaire augmente avec la température de réaction.

2. Procédé selon la revendication 1, **caractérisé en ce que** le niveau de l'excès molaire,

- pour une température de réaction dans la plage de 10 à < 25 °C, est compris dans la plage de 2,0 à 2,5,
- pour une température de réaction dans la plage de 25 à < 30 °C, est compris dans la plage de 2,5 à 3,0,
- pour une température de réaction dans la plage de 30 à < 40 °C, est compris dans la plage de 3,0 à 3,5.

3. Procédé selon l'une des revendications 1 et 2, **caractérisé en ce que** la température de réaction est déterminée au moyen de la température dans le réacteur, au niveau de la paroi externe du réacteur, au niveau d'une conduite destinée à introduire l'acide, la chlorite et/ou l'eau dans le réacteur, dans un récipient dans lequel l'acide, la chlorite et/ou l'eau à introduire dans le réacteur est/sont conservés, ou au niveau de la paroi du récipient ou dans l'air de l'environnement dans lequel le procédé est exécuté.

4. Procédé selon l'une des revendications 1 à 3, **caractérisé en ce que** l'excès molaire, en plus d'être fonction du niveau de la température de réaction, varie aussi en fonction de la durée de la réaction.

5. Procédé selon la revendication 4, **caractérisé en ce que** l'acide est introduit dans le réacteur sur la base de la chlorite, pour une durée de réaction dans la plage de 1 à 100 minutes, avec un excès molaire dans la plage de 2,0 à 3,5, la valeur de l'excès molaire augmentant avec la durée de la réaction à partir d'une durée de réaction de 20 minutes, à partir d'une durée de réaction de 30 minutes ou à partir d'une durée de réaction de 40 minutes.

**6.** Procédé selon l'une des revendications 3 à 5, **caractérisé en ce que** le niveau de l'excès molaire

- pour une durée de réaction dans la plage de 1 à < 4 mn, est compris dans la plage de 2,0 à 2,5,
- pour une durée de réaction dans la plage de 4 à < 30 mn, est compris dans la plage de 2,5 à 3,
- pour une durée de réaction dans la plage de > 30 à 40 mn, est compris dans la plage de 3,0 à 3,5.

**7.** Procédé selon l'une des revendications 1 à 6, **caractérisé en ce que** l'acide est de l'acide sulfurique ou de l'acide chlorhydrique.

**8.** Procédé selon l'une des revendications 1 à 7, **caractérisé en ce que** la chlorite est une solution aqueuse de chlorite de potassium ou de chlorite de sodium.

Fig. 1

Temperatur = 25°C

R = 3
R = 2,5
R = 2
R = 1,5
R = 1

Ausbeute $ClO_2$ in %

Reaktionszeit $t_R$ in min

Fig. 2

EP 3 760 590 B1

Temperatur = 35°C

R = 3
R = 2,5
R = 2
R = 1,5
R = 1

Ausbeute $ClO_2$ in %

Reaktionszeit $t_R$ in min

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013053789 A1
- US 8282891 B2
- US 6051135 A